# EUROPÄISCHE PATENTSCHRIFT

(11) **EP 1 923 366 B1**
(45) Veröffentlichungstag und Bekanntmachung des Hinweises auf die Patenterteilung: **18.09.2013**
(21) Anmeldenummer: 06023754.2
(22) Anmeldetag: 15.11.2006
(51) Int. Cl.: C04B 7/36, C04B 7/43, F27B 7/20

(54) **Verfahren zur Aufarbeitung von Bypassstäuben und hieraus erhältliche Produkte**
Process for recycling of bypass-dust and recovered products
Procédé de recyclage des poussières de dérivation et des produits recueillis

(43) Veröffentlichungstag der Anmeldung: 21.05.2008
(73) Patentinhaber: Kehrmann, Alexander, 46509 Xanten (DE)
(72) Erfinder: Stotter, Christoph, 9445 Radenthein (AT); Schwei, Peter, 9583 Faak am See (AT); Kehrmann, Alexander, 46509 Xanten (DE)
(74) Vertreter: HOFFMANN EITLE

(56) Entgegenhaltungen:
- DE-A1- 4 442 563
- US-B1- 6 331 207
- KESSLER G R: "CEMENT KILN DUST (CKD) METHODS FOR REDUCTION AND CONTROL" IEEE TRANSACTIONS ON INDUSTRY APPLICATIONS, IEEE SERVICE CENTER, PISCATAWAY, NJ, US, Bd. 31, Nr. 2, 1. März 1995 (1995-03-01), Seiten 407-412, XP000513111 ISSN: 0093-9994
- DATABASE WPI Week 200327 Derwent Publications Ltd., London, GB; AN 2003-271505 XP002435881 & JP 2003 001218 A (TAIHEIYO CEMENT CORP) 7. Januar 2003 (2003-01-07)
- DATABASE WPI Week 200578 Derwent Publications Ltd., London, GB; AN 2005-763518 XP002435882 & JP 2005 314178 A (TAIHEIYO CEMENT CORP) 10. November 2005 (2005-11-10)
- DATABASE WPI Week 200322 Derwent Publications Ltd., London, GB; AN 2003-224493 XP002435883 & JP 2002 316119 A (FUJI KIKAI KK) 29. Oktober 2002 (2002-10-29)

## Beschreibung

### Einleitung:

Bei der Herstellung von Zement fallen große Mengen Stäube an. Zur Erzeugung von 1 t Zement werden im Verlauf der Produktion etwa 2,6 - 2,8 t Rohstoffe, Kohle, Zementklinker, ggf. weitere Hauptbestandteile sowie Gips und/oder Anhydrit als Erstarrungregler gemahlen. Davon werden 5 % bis 10 % in den Trocknern, Mühlen, Öfen, Kühlern und Transporteinrichtungen aufgewirbelt. Der dabei entstehende Staub wird an verschiedenen Stellen abgesaugt. Auf diese Weise fallen stäubhaltige Abgas- und Abluftströme an, die je nach Verfahren und Betriebsweise 6.000 bis 14.000 m³ je t Zement betragen. Der Staub wird in Staubabscheidern vom Gas- oder Luftstrom getrennt und im Allgemeinen in die Produktion zurückgeführt (F. W. Locher, "Zement: Grundlagen der Herstellung und Verwendung", Verl. Bau und Technik, Düsseldorf 2000).

Die Stäube, die in den verschiedenen Produktionseinheiten eines Zementwerks anfallen, unterscheiden sich wesentlich in Zusammensetzung und Korngrößenverteilung. Sie werden deshalb grob in Rohmaterialstaub, Rohmehlstaub, Zementofenstaub (Abgasstaub), Klinkerstaub, Kohlenstaub und Zementstaub eingeordnet. Mit Ausnahme des Zementofenstaubs haben alle Stäube die gleiche chemische Zusammensetzung wie das entsprechende Ausgangsmaterial. Der Zementofenstaub enthält wechselnde Anteile von Rohmehlbestandteilen, Klinkerverbindungen und neu gebildeten Salzen, und, falls verwandt, andere Bestandteile. Die Rohmehlbestandteile sind im Wesentlichen Calcit, Dolomit, Quarz, Hämatit und Tonminerale. Die Klinkerverbindungen sind vorwiegend Silicate, außerdem CaO und das daraus entstandene Ca(OH)₂. Als Salze werden die Sulfate, Chloride, Carbonate und Hydrogencarbonate der Alkali- und Erdalkalimetalle sowie Ammoniumchlorid zusammengefasst. Sie sind besonders feinkörnig und leichter flüchtig als andere Bestandteile, und somit schwer aus dem Staub zu entfernen.

Ferner enthalten die Stäube Spuren von anderen Bestandteilen, die zum Teil gesundheitsschädlich und/oder umweltschädlich sind. In diesem Zusammenhang können As, Be, Br, Cd, Cr, F, Hg, I, Ni, Pb, Tl, V und Zn angeführt werden. Auch enthalten die Stäube Na₂O und K₂O.

Wie bereits vorstehend erwähnt, werden die abgeleiteten Stäube meist in den Herstellungsprozess zurückgeführt. Dies kann jedoch zu unerwünschten Nebenwirkungen führen, da z.B. ein hoher Chloridgehalt für die Zementherstellung nachteilig ist. Gesetzlich sind zur Zeit 0,1% Chlor als Grenzwert im Zement erlaubt. Ferner führen die sogennanten flüchtigen Bestandteile Na₂O, K₂O, Schwefel bzw. Sulfate, Chlor bzw. Chloride, Carbonate und Hydrogencarbonate der Alkali- und Erdalkalimetalle sowie Ammoniumchlorid zu Kostenerhöhungen, da sie dazu neigen, Kreisläufe im Ofen zu bilden, die die Bildung von Anbackungen im Ofeneinlaufbereich und im Steigschacht begünstigen. Verursacht durch die hohen Temperaturen im Drehofen verdampfen nämlich z.B. die im Ausgangsmaterial und den Ersatzbrennstoffen enthaltenen Chloride in der Regel. Wenn den heißen Bypassstäuben Wärme entzogen wird (z.B. mittels eines nachgeschalteten Wärmetauschers), kondensieren die Chloride wieder, z.B. im Wärmetauscher. Besonders Wärmetauschanlagen mit und ohne Kalzinator sind von diesem Problem betroffen. Damit bilden die Chloride einen Kreislauf, der zu einer Anreicherung im Ofen/Wärmetauschersystem führt, was aus den o.g. Gründen nachteilig ist.

Bis vor wenigen Jahren waren die Ausgangsmaterialien der Zement- bzw. Klinkerherstellung die Hauptquelle für den Eintrag von unerwünschten Nebensubstanzen, wie Chloride und schwefelhaltiger Substanzen. Die Kostenentwicklung in der Zementindustrie führte jedoch zum Einsatz von Ersatzbrennstoffen (wie DSD Abfälle, sortierte Müllfraktionen, Tiermehl, Reifen, Lösemittel usw.), die zwar einerseits die Brennstoffkosten reduzieren, jedoch andererseits zu einem erhöhten Eintrag von unerwünschten Substanzen, wie Chloriden, führen. Im Prozess der Zementerzeugung bilden Chloride jedoch in Kombination mit den ebenfalls in den Prozess eingebrachten schwefelhaltigen Verbindungen eine Grundlage für Betriebsstörungen im Herstellungsprozess. Deswegen ist die Rückführung großer Mengen chlorid-angereicherten Staubs unerwünscht.

In diesem Zusammenhang ist ferner zu bedenken, dass Staubemissionen umweltschädlich sind. In Deutschland bestehen daher gesetzliche Beschränkungen (z.B. TA Luft), die die Freisetzung von Stäuben regeln. Es ist daher nicht akzeptabel, die mit unerwünschten Substanzen belasteten Stäube in die Umwelt freizusetzen. Dementsprechend sind eine Reihe von Verfahren vorgeschlagen worden, die die Staubabtrennung bzw. die Weiterverarbeitung der abgetrennten Stäube betreffen. Die Vorrichtungen zur Staubabtrennung lassen sich im Wesentlichen in Masssenkraft-, filternde und elektrische Abscheider einordnen.

Die dampfförmigen Verbindungen können in den kälteren Bereichen des Ofens, des Vorwärmers oder in den nachgeschalteten Anlagen kondensieren und sich auf Brenngut und Staub niederschlagen. Wenn der auf dem Brenngut niedergeschlagene Anteil erneut in heiße Ofenbereiche gelangt und verdampft, bilden sich die sogenannten inneren Kreisläufe, d.h. Kreisläufe innerhalb des Ofens, zwischen Ofen und Vorwärmer und innerhalb des Vorwärmers. Ein äußerer Kreislauf entsteht, wenn die aus dem Ofen/Vorwärmerbereich ausgetragenen Bestandteile in den Gasreinigungsanlagen abgeschieden, mit dem Staub dem Rohmehl wieder zugesetzt und auf diese Weise in das Ofensystem zurückgeführt werden. Die inneren und äußeren Kreisläufe lassen sich durch Ausschleusen eines Teils der Kreislaufstoffe verhindern, z.B. durch einen Bypass oder durch teilweises oder vollständiges Abführen des abgeschiedenen Staubs.

Ein Bypass bewirkt z.B. dass ein Teilstrom des Ofengases mit dem darin enthaltenen Staub und den vollständig oder teilweise kondensierten Bestandteilen vor Eintritt in den Vorwärmer abgeführt wird. Wenn heiß entstaubt wird, wird dies als Heißgasbypass bezeichnet. Nachteilig an diesem Verfahren ist der Wärmeverlust der Anlage. Der Vorteil besteht in einer hohen Chlorid-Ausschleusung. Das gefilterte Heißgas kann entweder über einen eigenen Kamin abgeführt werden oder dem Hauptabgasstrom wieder zugeführt werden. Auch ist eine Verwertung des heißen Abgases bei der Mahltrocknung möglich.

Der Anteil des Bypassgases am gesamten Ofengasstrom beträgt im Allgemeinen 3 - 15%. Durch Abzug einer geringen Gas- und Staubmenge soll die höchste Effizienz an Austrag von flüchtigen Substanzen erreicht werden. Bei einer Abzugsrate von 5% werden hierbei üblicherweise Reduktionsgrade von etwa 80 % des Chlors, <10 % SO₃, < 15% K₂O und < 5% N₂O erreicht (siehe "Gas-Bypass-Anlagen zur Beherrschung von ChloridKreisläufen im Zementwerk", H. Schöffmann, online erhältlich auf den Webseiten der Montanuniversität Loeben).

Die im Bypass gereinigten bzw. abgetrennten Stäube/Gase werden im Allgemeinen dem Rohmehl wieder beigemengt. In diesem Fall ist es erforderlich, die abgetrennten, im Brennprozess unerwünschten Substanzen zu entfernen. Diese werden gewöhnlich entsorgt.

Eine andere gängige Möglichkeit zur Reduzierung von Schadstoffen in den Brennprodukten, die streng genommen jedoch nicht als Bypasstechnik zu verstehen ist, besteht darin, Filterstäube nicht mehr dem Rohmehl zuzumischen. Im Sinne dieser Erfindung sind jedoch auch solche Stäube, die nicht mehr dem Rohmehl zugemischt werden, von dem Begriff "Bypassstäube" umfasst, solang sie aus einem Zement- bzw. Klinker-herstelllungsprozess stammen, bei denen chloridhaltige Stäube/Gase auftreten.

Wie oben beschrieben besteht eine Vielzahl von Möglichkeiten zur Reduzierung des Eintrags unerwünschter Substanzen (wie die oben erwähnten flüchtigen Substanzen, insbesondere Chloride) in ein Brennprodukt wie Zement, Ziegel oder Klinker. Jedoch sind die konventionellen Bypass- und anderen Entstaubungsverfahren dahingehend unzureichend, dass sie nicht in allen Fällen die Bildung von externen und internen Kreisläufen (insbesondere Chloridkreisläufen) verhindern können. Dies kann dazu führen, dass bei konventionellen Verfahren die Chloridmenge in dem Endprodukt bzw. in dem abgeschiedenen, dem Rohmehl wieder zugeführten Bypassstaub nicht ausreichend reduziert ist. Darüber hinaus erlauben die konventionellen Verfahren keine Verwertung der aus den Bypassstäuben abgetrennten Materialien, die somit entsorgt werden müssen.

### Aufgabe und Ziele der Erfindung

Es ist somit eine Aufgabe der Erfindung, die Probleme des Standes der Technik zu lösen. Insbesondere ist es eine Aufgabe der Erfindung, ein Verfahren bereitzustellen, mit dem sich eine größere Verringerung der Chloridkonzentration des Bypassstaubs erreichen lässt. Eine andere Aufgabe der Erfindung ist es, ein Verfahren bereitzustellen, das eine einfache Abtrennung der ungewünschten flüchtigen Bestandteile aus dem Brennprozess erlaubt. Eine weitere Aufgabe der Erfindung ist es, ein Verfahren bereitzustellen, das die weitere Verwertung der abgetrennten Bestandteile ermöglicht, anstatt diese zu entsorgen. Darüber hinaus ist es eine weitere Aufgabe der Erfindung, ein Verfahren bereitzustellen, das die Verwendung von Abfallstoffen mit größerem (größer als 1 Gew.-%) Chloridgehalt als Ersatzbrennstoff in der Klinker-, Ziegel- bzw. Zementherstellung ermöglicht. Letztlich ist es eine weitere Aufgabe der Erfindung, die Abfallprobleme bei der Zement-, Klinker- bzw. Ziegelproduktion zu minimieren.

DE 44 42 563 A1 beschreibt ein Verfahren zur Behandlung und Verwertung von Bypassstäuben aus dem Zementherstellungsprozess, wobei der aus dem Zementherstellungsprozess abgezogene Staub mit Alkalichloriden und -sulfaten angereichert ist. Der Bypassstaub wird im wässrigen Medium extraktiv von löslichen Alkalichloriden und -sulfaten befreit und aus der entstandenen Sole werden nach Zugabe von Calciumchlorid durch Fällung unfraktionierte Kristallisation Sulfat als CaSO₄. 2H₂O und Chlorid als Alkalichlorid abgeschieden.

Kessler, IEEE Transactions on Industry Applications 31(1995) March/April, No.2, Seiten 407 bis 412, beschreibt Verfahren zur Verminderung der Bildung von Zementofenstaub.

JP 2001 0187877 beschreibt ein Verfahren zur Reinigung von Bypassstaub, welches die Fällung von Calcium und Blei vor der Kristallisation von Salzen bei Temperaturen von 30 bis 50°C beinhaltet.

### Zusammenfassung der Erfindung

Die Erfindung zielt darauf ab, die oben formulierten Aufgaben zu lösen. Insbesondere werden die oben formulierten Aufgaben gelöst durch
1. Verfahren zum Behandeln von Bypassstäuben bzw. -gasen aus der Ziegel-, Zement- oder Klinkerherstellung, das das in-Kontakt-bringen des Bypassstaubs/gases mit einer wässrigen Phase umfasst, wobei anschließend feste bzw. unlösliche Bestandteile durch Filtrieren oder Zentrifugieren abgetrennt werden und die erhaltene wässrige Phase nach einem Schritt zur Abtrennung von unerwünschten Metallen (As, Be, Cd, Co, Cr, Cu, Hg, Mn, Ni, Pb, Sb, Sn, Te, Tl, V) verkocht wird, um die gelösten Bestandteile zurückzugewinnen.
2. Verfahren gemäß Punkt 1, in dem das in-Kontakt-bringen mit der wässrigen Phase in einer Bypassleitung vorgenommen wird.
3. Verfahren gemäß einem der Punkte 1 oder 2, in dem vor dem in-Kontakt-bringen mit der wässrigen Phase eine Abtrennung der nicht-flüchtigen Bestandteile vorgenommen wird.
4. Verfahren gemäß der Punkte 1 oder 2, worin keine Abtrennung nicht-flüchtiger Bestandteile vor dem in-Kontakt-bringen mit der wässrigen Phase vorgenommen wird.
5. Verfahren gemäß einem der Punkte 1 - 4, worin das in-Kontakt-bringen mit der wässrigen Phase die Einleitung des Bypassgases/des Bypassstaubs in eine wässrige Phase umfasst.
6. Verfahren gemäß einem der Punkte 1 - 5, worin die festen Bestandteile einer weiteren Extraktion mit einer wässrigen Phase unterzogen werden.
7. Verfahren gemäß einem der Punkte 1 - 6, worin die festen bzw. ungelösten Bestandteile des Bypassstaubes/des Bypassgases nach dem in-Kontakt-bringen mit der wässrigen Phase in den Zement- oder Klinkerherstellungsprozess zurückgeführt werden.
8. Verfahren gemäß Punkt 3, worin die vor dem in-Kontakt-bringen mit der wässrigen Phase abgetrennten Bestandteile in den Zementherstellungsprozess zurückgeführt werden.
9. Verfahren gemäß einem der Punkte 1 - 8, worin die wässrige Phase wenigstens eine Hilfssubstanz enthält, die aus anorganischen Substanzen (vorzugsweise Chloride, Nitrate, Sulfide und Sulfate der Alkali- und Erdalkalimetalle als auch Ammoniumpolysulfid)und organischen Substanzen (vorzugsweise Salze chelatierender Säuren, wie EDTA) ausgewählt ist.
10. Verfahren gemäß einem der Punkte 1 - 9, worin die zum in-Kontakt-bringen mit dem Bypassstaub/dem Bypassgas verwendete wässrige Phase kontinuierlich oder in Intervallen umgewälzt oder ersetzt wird und durch frisch zugeführte oder umgewälzte, aufbereitete wässrige Phase ersetzt wird.
11. Verfahren gemäß einem der Punkte 1 - 10, worin der Chloridgehalt der festen bzw. unlöslichen Bestandteile der nach dem in-Kontakt-bringen mit der wässrigen Phase erhaltenen Aufschlämmung nach deren Abtrennung weniger als 20%, bevorzugt weniger als 10%, weiterhin stärker bevorzug weniger als 5%, und am stärksten bevorzugt weniger als 2% des Chloridgehalts der zur Klinker-, Ziegel- oder Zementherstellung verwendeten Ausgangsstoffe beträgt.
12. Verfahren gemäß Punkt 1, worin die Rückgewinnung der gelösten Bestandteile der wässrigen Phase eine fraktionierte Kristallisation umfasst.
13. Verfahren gemäß Punkt 1, worin die Abtrennung unerwünschter Metalle vor einer Weiterbehandlung der nach der Abtrennung resultierenden wässrigen Phase zum Erhalt der gelösten Bestandteile durchgeführt wird.
14. Verfahren gemäß einem der Punkte 1 - 13, worin zur Weiterbehandlung der wässrigen Phase Wärmeenergie verwendet wird, die dem Bypassgas/dem Bypassstaub vor dem in-Kontakt-bringen mit der wässrigen Phase entzogen wird.
15. Produkt, erhalten aus der Rückgewinnung der in der nach dem in-Kontakt-bringen in der wässrigen Phase gelösten Bestandteile gemäß einem Verfahren eines der Punkte 1 - 14.
16. Produkt gemäß Punkt 15, das im Wesentlichen (d.h. bevorzugt mehr als 80 Gew.-%, stärker bevorzugt mehr als 90% Gew.-%) aus Alkali- und Erdalkalimetallchloriden besteht.
17. Verwendung eines Produkts gemäß Punkt 15 oder 16 als Streusalz, Leckstein, Rohstoff für Elektrolysen zur Chlor- und/oder Alkalihydroxidgewinnung, Flammschutz, Dustbinder, als Düngerkomponente oder zur Glas- bzw. Keramikherstellung.

### Kurze Beschreibung der Zeichnungen

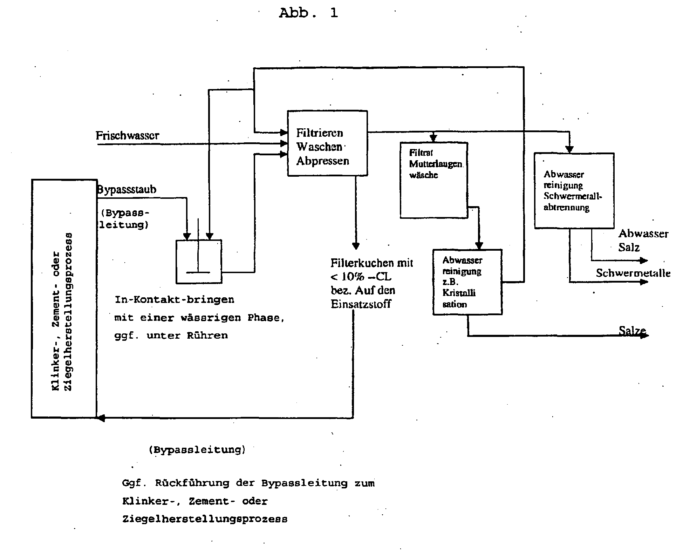

Abb. 1 ist ein Fließschema, das eine mögliche Ausführungsform des erfindungsgemäßen Verfahrens zeigt. Hierbei wird der Bypassstaub aus dem Klinker-, Ziegel- bzw. Zementherstellungsprozess ausgeführt, in eine wässrige Phase eingeleitet, diese wird filtriert und abgepresst, um einen Filterkuchen mit einem Cl-Gehalt von weniger als 10% des Ausgangsstoffes (des Bypassstaubes) zu erhalten. Das Filtrat kann einer Abwasserreinigung zur Entfernung von Schwermetallen unterzogen werden, und es kann eine Kristallisation durchgeführt werden, um die in dem Filtrat gelösten Salze (z.B. NaCl) zurück zu gewinnen. Der erhaltene Filterkuchen kann ggf. in den Klinker-, Ziegel- bzw. Zementherstellungsprozess zurückgeführt werden.

### Genaue Beschreibung der Erfindung

Der Begriff "Bypassstaub" bzw. "Bypassgas", wie er hierhin verwendet wird, umfasst sämtliche Staub- und Gasströme, die in einer Anlage zur Ziegel-, Zement- oder Klinkerherstellung von dem Hauptstrom der Bestandteile des Zements, der Ziegel bzw. des Klinkers abgetrennt werden. Sie können danach dem Hauptstrom, an gleicher oder anderer Stelle, ggf. nach einer Aufarbeitung bzw. Entfernung bestimmter Bestandteile, wieder zugeführt werden. Sie können alternativ auch verworfen werden.

Der Begriff "Bypassleitung" bezeichnet eine Leitung, die von dem Hauptstrom der zur Ziegel-, Zement- oder Klinkerherstellung benötigten Ausgangsstoffe abzweigt. Die Bypassleitung kann dann ggf. zu dem Hauptstrom der zur Ziegel-, Zement- oder Klinkerherstellung benötigten Ausgangsstoffe zurückführen, oder sie kann nicht zu dem Hauptstrom der zur Ziegel-, Zement- oder Klinkerherstellung benötigten Ausgangsstoffe zurückführen.

Wie oben erwähnt, wird in dem erfindungsgemäßen Verfahren Bypassstaub bzw. -gas in Kontakt mit einer wässrigen Phase gebracht. Dies kann z.B. dadurch erreicht werden, dass der Bypassstaub/das Bypassgas nach dem Prinzip einer Gaswaschflasche durch ein Rohr in eine wässrige Lösung bzw. Wasser eingeleitet wird. Alternativ kann das Bypassgas/der Bypassstaub mittels eines Sprührohrs oder einer Berieselungsanlage, die sich aus mehreren Sprührohren zusammensetzt, in Kontakt mit Wasser bzw. einer wässrigen Lösung gebracht werden. Dies kann im Gleich- oder Gegenstrom vorgenommen werden. Die hieraus resultierende wässrige Phase, die die löslichen Bestandteile in gelöster Form sowie die festen (unlöslichen) Bestandteile des Bypassgases bzw. - staubes enthält (d.h. die gebildete Aufschlämmung) wird in diesem Fall gesammelt, gegebenenfalls von unlöslichen (festen) Stoffen befreit und der nachstehend beschriebenen Weiterbehandlung unterzogen.

Dadurch, dass das Bypassgas/der Bypassstaub in Kontakt mit einer wässrigen Phase gebracht wird bzw. hierin eingeleitet wird, lösen sich die hierin enthaltenen flüchtigen bzw. wasserlöslichen Bestandteile in der wässrigen Phase. Die nichtlöslichen Bestandteile werden von der gebildeten Aufschlämmung durch Filtration oder durch Zentrifugieren abgetrennt. Der hierbei abgetrennten festen (unlöslichen) Bestandteile (z.B. der erhaltene Filterkuchen) weisen eine wesentlich verringerte Konzentration an unerwünschten Alkali- und Erdalkalisalzen (wie Chloriden, Sulfaten etc.) als auch an unerwünschten Metallen (As, Be, Cd, Co, Cr, Cu, Hg, Mn, Ni, Pb, Sb, Sn, Te, Tl, V) auf. Somit können, falls gewünscht, die abgetrennten unlöslichen Bestandteile (z.B. der Filterkuchen im Fall einer Filtration) gegebenenfalls in den Zement- bzw. Klinkerherstellungsprozess zurückgeführt werden, ohne das dies zur Anreicherung des resultierenden Zements bzw. Klinkers mit diesen unerwünschten Substanzen führt. Die abgetrennten festen Bestandteile können auch einer intensiveren Reinigung unterzogen werden, z.B. durch Extraktion des Filterkuchens im Falle einer Filtration, um den Gehalt an unerwünschten Bestandteilen weiter zu reduzieren. In kleinem Maßstab kann solch eine Extraktion z.B. durch Soxleth-Extraktion durchgeführt werden. Großtechnisch lässt sich solch eine Extraktion z.B. mit einem mixer-settler (Mischabsetzer) durchführen.

Die flüchtigen bzw. löslichen Bestandteile, die für die Zement- bzw. Klinkerherstellung unerwünscht sind und die sich beim in-Kontakt-bringen mit der wässrigen Phase hierin lösen, setzen sich im Wesentlichen aus Chloriden und anderen flüchtigen Bestandteilen, wie Sulfaten (bzw. SO₃) zusammen, können aber auch andere Bestandteile, wie Schwermetalle oder Nitrate enthalten. Wenn die unlöslichen Bestandteile des Bypassstaubes nach dem in-Kontakt-bringen mit der wässrigen Phase und ihrer Abtrennung (z.B. mittels Filtration) wieder dem Rohmehl zugesetzt° wird, kann hierdurch eine wesentliche Verringerung des Chloridanteils erreicht werden. Vorzugsweise beträgt der Chloridanteil der unlöslichen Bestandteile nach dem in-Kontakt-bringen mit der wässrigen Phase und ihrer Abtrennung hiervon weniger als 20 Gew.-%, stärker bevorzugt weniger als 10 Gew.-%, weiterhin stärker bevorzugt weniger als 5 Gew.-%, und am stärksten bevorzugt weniger als 2 Gew.-% des Chloridanteils des Gases/des Staubes vor dem Einleiten durch die wässrige Phase (Gew.-%), d.h. des Chloridanteils der Ausgangsmaterialien zur Zement-, Klinker- bzw. Ziegelherstellung bzw. des Rohmehls.

Das erfindungsgemäße Verfahren kann auf kontinuierliche oder diskontinuierliche (batch) Weise geführt werden. Dies trifft sowohl auf das in-kontakt-bringen des Bypassstaubes bzw. - gases mit der wässrigen Phase als auch die Aufarbeitung der hieraus resultierenden wässrigen Phase (der gebildeten Aufschlämmung) zu.

Bei einer kontinuierlichen Verfahrensführung beim in-Kontakt-bringen des Bypassstaubs mit der wässrigen Phase kann entweder ein Strom von Bypassgas bzw. -staub mit einer Charge (frischer oder aufbereiteter) wässriger Phase in Kontakt gebracht werden, oder es können sowohl Bypassgas bzw. -staub als auch die (frische oder aufbereitete) wässrige Phase kontinuierlich zugeführt werden. Im ersten Fall kann der Strom des Bypassstaubs bzw. des -gases ggf. bis zur Sättigung der Charge der wässrigen Phase mit löslichen Bestandteilen in Kontakt mit der Charge der wässrigen Phase gebracht werden, z.B. durch Einleitung hierin. Hierbei beträgt das Verhältnis der Charge der wässrigen Phase zu dem Mengenstrom des Bypassstaubs/des Bypassgases vorzugsweise im Bereich von 0,5 - 100 h, stärker bevorzugt im Bereich von 1 - 50 h, weiterhin stärker bevorzugt im Bereich von 1,5 - 20 h, am stärksten bevorzugt im Bereich von 2 - 12 h, ausgedrückt als [Gewicht der Charge der wässrigen Phase / kg] : [Mengenstrom des Bypassgases/des Bypassstaubs / kg h⁻¹].
Im zweiten Fall werden der Bypassstaub bzw. das -gas und die wässrige Phase in kontinuierlicher Weise zugeführt. Hierbei beträgt das Verhältnis des Mengenstroms der wässrigen Phase zu dem Mengenstrom des Bypassstaubs bzw. des -gases bevorzugt im Bereich 0,5 - 100, stärker bevorzugt im Bereich von 0,8 - 50, weiterhin stärker bevorzugt im Bereich von 1,0 - 20, und am stärksten bevorzugt im Bereich von 1,2 - 6, ausgedrückt als [Mengenstrom der wässrigen Phase/kg h⁻¹] : [Mengenstrom des Bypassgases/des Bypassstaubs/kg h⁻¹]. Während das hierzu verwendete Verfahren nicht besonders beschränkt ist, kann hierbei z.B. die wässrige Phase kontinuierlich über eine Berieselungsanlage oder ein oder mehrere Sprührohe in Kontakt mit dem Strom des Bypassgases/des Bypassstaubes gebracht werden. Dies geschieht vorzugsweise in einer Bypassleitung.

In den obigen Ausführungen zur kontinuierlichen Verfahrensführung beim in-Kontakt-bringen des Bypassstaubs mit der wässrigen Phase bezieht sich das Gewicht des Mengenstroms des Bypassstaubs/des Bypassgases auf das Gewicht der bei Raumtemperatur festen Bestandteile, d.h. die Bestandteile des Ausgangsmaterials zur Klinker-, Ziegel- bzw. Zementherstellung bzw. des Rohmehls.

Bei einem diskontinuierlichen Verfahren beim in-Kontakt-bringen des Bypassstaubs bzw. des - gases mit der wässrigen Phase wird der Bypassstaub bzw. das -gas zunächst gesammelt, um dann eine Charge des Bypassstaubes in Kontakt mit der wässrigen Phase zu bringen. Hierbei beträgt das Gewichtsverhältnis der wässrigen Phase zum gesammelten Bypassstaub bzw. -gas (d.h. das Verhältnis [Gewicht der Charge der wässrigen Phase / kg] : [Gewicht der Charge des gesammelten Bypassstaubs bzw. -gases / kg]) vorzugsweise im Bereich von 0,1- 10, stärker bevorzugt 0,8 - 8, und weiterhin stärker bevorzugt 1 - 2,5, wenn eine Charge der wässrigen Phase verwendet wird. In einem diskontinuierlichem Verfahren kann der gesammelte Bypassstaub auch in die wässrige Phase bis zur ihrer Sättigung eingeleitet bzw. hiermit in Kontakt gebracht werden. Die wässrige Phase kann dann gegebenenfalls durch frische bzw. aufbereitete wässrige Phase ersetzt werden, falls dies gewünscht ist. Auch kann kontinuierlich oder in Intervallen frische oder aufbereitete wässrige Phase zu der Charge des gesammelten Bypassstaubs bzw. des -gases zugeführt werden, während verbrauchte bzw. gesättigte wässrige Phase ggf. aus dem Bereich des in-Kontakt-bringens entfernt wird.

Die vorstehend erwähnte aufbereitete wässrige Phase kann ggf. eine solche sein, die nach Abtrennung des Bypassstaubs/des Bypassgases und Rückgewinnung der gelösten Bestandteile nach dem in-Kontakt-bringen mit dem Bypassstaub/dem Bypassgas (z.B. durch fraktionierte Kristallisation oder Verkochen der wässrigen Phase) erhalten wird. Diese aufbereitete wässrige Phase kann dann zum in-Kontakt-bringen mit dem Bypassgas/dem Bypassstaub wiederverwendet werden.

Die aus dem kontinuierlichen oder diskontinuierlichen in-Kontakt-bringen des Bypassstaubs mit der wässrigen Phase erhaltene Aufschlämmung, inklusive der unlöslichen, festen Bestandteile, kann entweder kontinuierlich oder diskontinuierlich aufgearbeitet werden, wobei die unlöslichen Bestandteile abgetrennt werden und die erhaltene Lösung zum Erhalt der hierin enthaltenen Substanzen weiterbehandelt wird, z.B. durch fraktionierte Kristallisation oder Verkochen des Lösunsgmittels. Hierbei umfasst die Weiterbehandlung der wässrigen Phase eine Abtrennung von den oben erwähnten unerwünschten Metallen (As, Be, Cd, Co, Cr, Cu, Hg, Mn, Ni, Pb, Sb, Sn, Te, Tl, V) vor dem Verkochen/der fraktionierten Kristallisation der wässrigen Phase, z.B. mittels Sulfidfällung, so dass die aus dem Abtrennen/der fraktionierten Kristallisation erhaltenen Produkte einen reduzierten Gehalt an diesen Metallen aufweisen. Dies kann für die weitere Verwendung wünschenswert sein.

In einer bevorzugten Ausführungsform der Erfindung können vor dem Einleiten in die wässrige Phase die nicht-flüchtigen (d.h. die bei der Temperatur im Bypass festen) Bestandteile des Bypassstaubs/des Bypassgases abgetrennt werden. Dies kann durch konventionelle Techniken erreicht werden, wie z.B. durch Verwenden eines Masssenkraft-, filternden und elektrischen Abscheiders. Einzelheiten der hierin verwendbaren Abscheider sind dem Fachmann bekannt; darüber hinaus kann auf F. W. Locher, "Zement: Grundlagen der Herstellung und Verwendung", Verl. Bau und Technik, Düsseldorf 2000, verwiesen werden. Die Abtrennung der nicht-flüchtigen Bestandteile vor dem in-Kontakt-bringen mit der wässrigen Phase hat den Vorteil, dass die Schlammbildung in der wässrigen Phase unterdrückt bzw. reduziert werden kann, was die Aufarbeitung und Weiterverwendung der wässrigen Phase erleichtert. Ferner weisen die abgetrennten nicht-flüchtigen Bestandteile einen gegenüber der Ausgangssubstanz (dem Rohmehl) reduzierten Chloridgehalt auf und können somit dem Rohmehl bzw. dem Brennprozess wieder zugeführt werden, ohne den Chloridgehalt des Endprodukts nachteilig zu erhöhen, da bei den Temperaturen im Bypass die Chloride im Wesentlichen in der Gasphase vorliegen. In diesem Fall führt das in-kontakt-bringen des Gases/des Staubes nach Abtrennung der nicht-flüchtigen Bestandteile mit der wässrigen Phase dazu, dass die Chloridkonzentration und die Konzentration anderer umweltschädlicher Abgase reduziert wird, wenn das Gas/der Staub nach Abtrennung der nicht-flüchtigen Bestandteile und nach der Einleitung in die wässrige Phase nicht in den Herstellungsprozess rückgeführt wird. Wie bereits oben erwähnt können die vor dem in-Kontakt-bringen des Bypassstaubs bzw. des -gases mit der wässrigen Phase abgetrennten festen (nicht-flüchtigen) Bestandteile auch einer zusätzlichen Reinigung (z.B. durch Waschen oder mittels Extraktion) unterzogen werden, um den Gehalt unerwünschter Substanzen vor einer möglichen Rückführung in den Zementherstellungsprozess weiter zu verringern.

Die wässrige Phase kann aus reinem Wasser bestehen. Vorzugsweise wird hierbei Leitungswasser verwendet, es ist allerdings auch möglich, Brauchwasser zu verwenden (d.h. Wasser, das keine Trinkwasserqualität aufweist), was ökonomisch vorteilhaft sein kann. Es ist auch möglich, der wässrigen Phase, falls gewünscht, Hilfssubstanzen zuzusetzen, die die Reinigungswirkung bzw. die Aufnahme von flüchtigen Bestandteilen unterstützen. In diesem Zusammenhang ist es z.B. möglich, der wässrigen Phase eine oder mehrere Hilfssubstanzen zuzusetzen, die aus anorganischen Substanzen (vorzugsweise Chloride, Nitrate, Sulfide und Sulfate der Alkali- und Erdalkalimetalle als auch Ammoniumpolysulfid) und organischen Substanzen (vorzugsweise Salze chelatierender Säuren, wie Na₂-EDTA) ausgewählt werden. Hierbei umfassen die organischen und anorganischen Substanzen auch Säuren, wie z.B Mineralsäuren (wie z.B. HCl, H₂SO₄, H₃PO₄ usw.) und/oder organische Säuren (wie z.B. Ameisensäure, Essigsäure), und Basen, wie z.B. anorganische Basen (z.B. NaOH, KOH, LiOH, Ca(OH)₂) und/oder organische Basen (z.B. stickstoffhaltige organische Basen, wie z.B. Triethylamin und Pyridin).

Die Zugabe von anorganischen Substanzen kann die Löslichkeit der Bestandteile des Bypassgases/des Bypassstaubes in der wässrigen Phase beeinflussen. Zum Beispiel kann durch Zugabe von Natriumnitrat die Löslichkeit von Natriumchlorid verringert werden (Fremdioneneffekt). Durch Zugabe von Sulfiden, Polysulfiden oder anderen Anionen schwer löslicher Schwermetallsalze zu der wässrigen Phase ist es möglich, die Aufnahme von Metallen wie As, Be, Br, Cd, Cr, F, Hg, I, Ni, Pb, Tl, V und Zn zu erleichtern, da diese dann als schwerlösliche Salze (z.B. als Sulfide) ausfallen. Diese können dann vor einer möglichen Rückgewinnung der in dem Bypassstaub/dem Bypassgas enthaltenen und beim in-Kontakt-bringen mit dem Bypassstaub in der wässrigen Phase gelösten Alkali- und Erdalkalimetallsalze separat abgetrennt werden, um den Gehalt dieser oben erwähnten Metalle bzw. derer Salze in dem nach Abtrennung der unlöslichen Bestandteile und Entfernung des Lösungsmittels aus der wässrigen Phase (z.B. durch Verkochen oder fraktionierte Kristallisation) erhaltenen Produkt möglichst gering zu halten.

Die Zugabe organischer Salze oder Säuren kann eine löslichkeitsverbessernde Wirkung auf Metalle ausüben, da diese dann in Lösung komplexiert werden und somit dem Gas/dem Staub entzogen werden. Dies kann bei einer evtl. Rückführung der abgetrennten nicht-flüchtigen Bestandteile in den Zement-, Klinker- bzw. Ziegelherstellungsprozess günstig sein, da diese Metalle dann nicht bzw. in geringerer Menge in den rückgeführten nicht-flüchtigen Bestandteilen (und somit im Endprodukt, d.h. dem Ziegel, dem Zement bzw. dem Klinker) enthalten sind. Dies kann zur Reduzierung der Schwermetallbelastung auch günstig sein, wenn die nichtflüchtigen Bestandteile nicht zurückgeführt, sondern entsorgt werden.

Wie bereits oben erwähnt, kann als wässrige Phase reines Wasser verwendet werden, oder es können der wässrigen Phase organische oder anorganische Hilfssubstanzen zugesetzt werden. In diesem Fall beträgt die Konzentration der organischen und/oder anorganischen Substanzen in der wässrigen Phase vorzugsweise 0,01 - 10 Gew.-%, stärker bevorzugt 0,1 - 5 Gew.-%, und am stärksten bevorzugt 0,5 - 3 Gew.-%. Für eine möglichst ökonomische Prozessführung ist die Verwendung von Wasser (Leitungs- bzw. Brauchwasser) als wässrige Phase bevorzugt, wohingegen die Verwendung einer wässrigen Phase, die eine oder mehrere der o.g. Hilfssubstanzen enthält, aus den o.g. genannten Gründen für eine bessere Auswaschung der löslichen Substanzen oder zur Entfernung von unerwünschten Stoffen (z.B. Fällung als Schwermetallsulfide) vor der möglichen Weiterverwendung oder vor der Entsorgung der wässrigen Phase bevorzugt sein kann.

In der Erfindung wird Bypassstaub bzw. Bypassgas in die wässrige Phase eingeleitet bzw. in Kontakt mit der wässrigen Phase (z.B. durch eine Berieselung) gebracht, und hierdurch lösen sich die löslichen Bestandteile in der wässrigen Phase. Es kann solange Bypassstaub/gas eingeleitet werden, bis die Löslichkeitsgrenze der flüchtigen Bestandteile erreicht ist. Die flüchtigen Bestandteile kristallisieren dann (ggf. nach dem Abkühlen) als Salze aus der gesättigen bzw übersättigten Lösung aus. Wie bereits vorher erwähnt können vorher z.B. Schwermetalle aus der erhaltenen Lösung abgetrennt werden.

Es ist bevorzugt, die wässrige Phase nach dem in-Kontakt-bringen mit dem Bypassgas/dem Bypassstaub und vor dem ggf. vorgenommenen Auskristallisieren der Salze zu filtrieren oder die unlöslichen Bestandteile auf andere Weise (zum Beispiel durch zentrifugieren) abzutrennen. Die abgetrennten unlöslichen Bestandteile können dann dem Brenn- bzw.

Produktionsprozess wieder zugeführt werden, da er weniger unerwünschte Bestandteile (wie z.B. Chloride) enthält.

Standortbezogen und den gesetzlichen Anforderungen konform kann die wässrige Phase in das öffentliche Kanalssystem eingeleitet werden, falls keine Weiterverwendung der hierin enthaltenen Inhaltsstoffe erwünscht ist.

Alternativ kann die wässrige Phase nach der ggf. vorgenommenen Abtrennung der unlöslichen Bestandteile jedoch auch z.B. einer fraktionierten Kristallisation unterworfen werden, um die löslichen Bestandteile zurück zu gewinnen. Die wässrige Phase kann zum Erhalt der hierin gelösten Substanzen auch verkocht werden, um das Lösungsmittel (Wasser) zu entfernen. Hierbei kann die zum Verkochen benötigte Wärme dem Bypassstaub/gas vor dem in-Kontakt-bringen mit der wässrigen Phase (z.B. durch Einleiten in die wässrige Phase) bzw. vor dem ggf. vorgelagerten Abtrennschritt der nicht-flüchtigen bzw. unlöslichen Substanzen entzogen werden, was zu einer Kostenersparnis führt.

Die (z.B. durch fraktionierte Kristallisation oder Verkochen) aus der wässrigen Phase gewonnenen Salze und die von der wässrigen Phase abgetrennten festen bzw. unlöslichen Bestandteile können jeweils weiterverwendet werden.

Hierbei können z.B. die abgetrennten festen Bestandteile (z.B. der Filterrückstand bei einer Abtrennung durch Filtration) in den Klinker- bzw. Zementherstellungsprozess rückgeführt werden. Wie bereits oben erwähnt weisen diese einen gegenüber den Ausgangssubstanzen reduzierten Chloridgehalt auf. Somit ermöglicht das erfindungsgemäße Verfahren die Verwendung von Abfallstoffen mit größerem Chloridgehalt (d.h. größer 1 Gew.-%) als Ersatzbrennstoff im Zement-, Klinker bzw. Ziegelherstellungsprozess, da die hierin enthaltenen Chloride durch das erfindungsgemäße Verfahren im Wesentlichen (d.h. zu mehr als 80 %, vorzugsweise zu mehr als 90 %, stärker bevorzugt zu mehr als 95 %, und am stärksten bevorzugt zu mehr als 98 %) abgetrennt werden und sich somit nicht im Endprodukt wieder finden.

Die nach Abtrennung der unlöslichen Bestandteile aus der wässrigen Phase erhaltenen Salze (die z.B. durch fraktionierte Kristallisation oder Verkochen des Wassers isoliert werden können) bestehen im Wesentlichen aus Alkali-und Erdalkalimetallsalzen, insbesondere den entsprechenden Chloriden. Diese können dann anderen Verwendungen zugeführt werden. Mögliche Verwendungen umfassen die Verwendung als Streusalz, Leckstein, Rohstoff für Elektrolysen zur Chlor-und/oder Alkalihydroxidgewinnung, Flammschutz, Dustbinder, als Düngerkomponente oder zur Glas- bzw. Keramikherstellung.

Aus Umweltgesichtspunkten kann es erforderlich sein, die Menge an umweltschädlichen Stoffen in der wässrigen Phase nach Entfernung der weiterverwendbaren Bestandteile (d.h. z.B. die Alkali- und Erdalkalimetallsalze, insbesondere die Chloride) gering zu halten. Insbesondere darf die zu verwerfende wässrige Phase keine unerlaubten Konzentrationen an Fremdbestandteilen, wie Be, Br, Cd, Cr, F, Hg, I, Ni, Pb, Tl, V und Zn, enthalten. Hierzu kann es zweckmäßig sein, die wässrige Phase nach Entfernung der weiterverwendbaren Bestandteile und vor einer möglichen Entsorgung einer chemischen Analyse zu unterziehen. Dies geschieht vorzugsweise in Echtzeit, d.h. es ist bevorzugt eine Analysevorrichtung im Abfallflüssigkeitsstrom installiert. Falls die Konzentrationen der o.g. Elemente zu hoch sein sollten, kann die Abfallflüssigkeit einer weiteren Behandlung unterzogen werden, wie z.B. einer Abtrennung von Schwermetallen durch Sulfidfällung, wie sie auch vor der Gewinnung der weiterverwendbaren Bestandteile durchgeführt werden kann, was vorstehend beschrieben ist.

Falls nicht anders angegeben, beziehen sich die Prozentangaben in dieser Erfindung auf Gewichtsprozent.

Die prozentualen Anteile von Substanzen könne mittels AAS/ICP gemessen werden.

Die nachfolgen Beispiele veranschaulichen die Wirkung des erfindungsgemäßen Verfahrens:

### Beispiel 1:

Rohmehl: Worse Case Mischung "Seibel & Söhne und HZ Langfurt Es wurden 1 Kg Bypasstaub mit 5 Kg Wasser behandelt

| | | | Rohmehl | Kompone nte in Rohmehl in g/kg | Extraktio nsrückstand | Komponente im Extrakt in g/Kg | In Wasser gelöste Komponente pro kg Rohmehl in g/kg |
|---|---|---|---|---|---|---|---|
| Natriumoxid | DIN EN | % | 0.89% | 8.9 | 0.22% | 1.67% | 7.23 |
| Kaliumoxid | DIN EN | % | 13.35% | 133.5 | 0.33% | 2.51 | 130.99 |
| Sulfatals SO3 | DIN EN | % | 9.98% | 99.8 | 5.14% | 39.06 | 60.74 |
| Chlorid | DIN EN | % | 5.85% | 58.5 | 0.05% | 0.40 | 58.10 |
| **Summe wasserlösl. Komponenten:** | | | **30.07%** | **300.7** | **5.74%** | **43.64** | **257.06** |
| | | | | | | | |

| | | | Rohmehl | Kompone nte in Rohmehl in mg/kg Rohmehl | Gefunden werden im Extraktio nsrückstand (=760 g pro 1000 g Rohmehl) | Wenn alles in den Extraktion srückstand ginge wären erwartet: in mg/kg Rückstand | In Wasser gelöste Komponente in mg/kg auf 1 kg Wasser |
|---|---|---|---|---|---|---|---|
| Arsen | S/ICP - | µg/ g | 8.04 | 8.04 | 9.69 | 10.58 | 0.89 |
| Beryllium | S/ICP | µg/ g | 0.86 | 0.86 | 0.78 | 1.13 | 0.35 |
| Cadmium | S/ICP | µg/ g | 245 | 245 | 293 | 322.37 | 29.37 |
| Kobalt | S/ICP | µg/ g | 7.73 | 7.73 | 9.56 | 10.17 | 0.61 |
| Chrom | S/ICP | µg/ g | 54.5 | 54.5 | 77 | 71.71 | -5.29 |
| Kupfer | S/ICP | µg/ g | 48.4 | 48.4 | 58.8 | 63.68 | 4.88 |
| Quecksilber | S/ICP | µg/ g | 2.24 | 2.24 | 1.65 | 2.95 | 1.30 |
| Mangan | S/ICP | µg/ g | 286 | 286 | 319 | 376.32 | 57.32 |
| Nickel | S/ICP | µg/ g | 77.9 | 77.9 | 98.1 | 102.50 | 4.40 |
| Blei | S/ICP | µg/ g | 5180 | 5180 | 3063 | 6815.79 | 3752.79 |
| Antimon | S/ICP | µg/ g | 12.6 | 12.6 | 15 | 16.58 | 1.58 |
| Zinn | S/ICP | µg/ g | 50.7 | 50.7 | 127 | 66.71 | -60.29 |
| Tellur | S/ICP | µg/ g | 5.49 | 5.49 | 4.89 | 7.22 | 2.33 |
| Thallium | S/ICP | µg/ g | 47.7 | 47.7 | 12.9 | 62.76 | 49.86 |
| Vanadium | S/ICP | µg/ g | 198 | 198 | 210 | 260.53 | 50.53 |
| **Summe** | | | **6225.1 6** | | **400.37** | **8191.00** | **3890.63** |

### Beispiel 2:

| Probenkennung | | 2006-E_ZCH-3701-1 | | 2006-E_ZCH-3701-3 | 2006-E_ZCH-3702-1 | 2006-E_ZCH-3702-3 |
|---|---|---|---|---|---|---|
| | | Bypass-/Rohmehlstaub "S" | | Bypass-/Rohmehl-staub "S" Extraktion srückstand | Bypass-/Rohmehlstaub "L" | Bypass-/Rohmehlstaub "L" Extraktionsrückstand |
| Natriumoxid | nach DIN EN 196-2 | % | 0,89 | 0,22 | 0,47 | 0,07 |
| Kaliumoxid | nach DIN EN 196-2 | % | 9,33 | 1,47 | 13,35 | 0,33 |
| Sulfat als S03 | nach DIN EN 196-2 | % | 7,36 | 6,97 | 9,98 | 5,14 |
| Arsen | AAS/ICP -MS | µg/g | 2,73 | 3,20 | 8,04 | 9,69 |
| Beryllium | AAS/ICP -MS | µg/g | 0,86 | 0,78 | 0,3 | 0,39 |
| Cadmium | AAS/ICP -MS | µg/g | 245 | 293 | 63,5 | 81,6 |
| Kobalt | AAS/ICP -MS | µg/g | 7,73 | 9,56 | 4,88 | 6,13 |
| Chrom | AAS/ICP -MS | µg/g | 54,5 | 77,0 | 49,8 | 79,3 |
| Kupfer | AAS/ICP -MS | µg/g | 34,3 | 41,7 | 48,4 | 58,8 |
| Hg | AAS/ICP -MS | µg/g | 2,24 | 1,65 | 0,02 | <0,02 |
| Mangan | AAS/ICP -MS | µg/g | 286 | 319 | 265 | 335 |
| Nickel | AAS/ICP -MS | µg/g | 77,9 | 98,1 | 29,0 | 34,4 |
| Blei | AAS/ICP -MS | µg/g | 5180 | 3063 | 854 | 806 |
| Antimon | AAS/ICP -MS | µg/g | 8,62 | 9,83 | 12,6 | 15,0 |
| Zinn | AAS/ICP -MS | µg/g | 50,7 | 127 | 32,7 | 87,4 |
| Tellur | AAS/ICP -MS | µg/g | 5,49 | 4,89 | <1,00 | <1,00 |
| Thallium | AAS/ICP -MS | µg/g | 47,7 | 12,9 | 11,6 | 8,04 |
| Vanadium | AAS/ICP -MS | µg/g | 198 | 210 | 72,3 | 82,3 |

### Beispiel 3:

| | | | Bypass/Rohmehlstaub "S" | Bypass/Rohmehlstaub "L" |
|---|---|---|---|---|
| Extraktionsrückstand | % der OP | | 77,70 | 77,67 |
| | | | | |
| Durch Extraktion gelöste Anteile der Bestandteile in % bezogen auf den Anteil des Bestandteils in der Originalsubstanz | | | | |

| | | | Bypass/Roh mehlstaub "S" | Bypass/Rohmeh lstaub "L" |
|---|---|---|---|---|
| lösl. Natriumoxid | nach DIN EN 196-2 | % des B | 80,8 | 88,4 |
| lösl. Kaliumoxid | nach DIN EN 196-2 | % des B | 87,8 | 98,1 |
| lösl. Sulfat als SO3 | nach DIN EN % 196 | des B | 26,4 | 60,0 |
| lösl. Chlorid | nach DIN EN 196 | % des B | 98,4 | 99,3 |
| lösl. Arsen | nach DIN EN 196 | % des B | 8,9 | 6,4 |
| lösl. Beryllium | AAS/ICP-MS | % des B | 29,5 | 8,2 |
| lösl. Cadmium | AAS/ICP | % des B | 7,1 | 0,2 |
| lösl. Kobalt | AAS/ICP | % des B | 3,9 | 2,4 |
| lösl. Chrom | AAS/ICP | % des B | -9,8* | -23,7* |
| lösl. Kupfer | AAS/ICP | % des B | 5,5 | 5,6 |
| lösl. Quecksilber | AAS/ICP | % des B | 42,8 | n.ber. |
| lösl. Mangan | AAS/ICP | % des B | 13,3 | 1,8 |
| lösl. Nickel | AAS/ICP | % des B | 2,2 | 7,9 |
| lösl. Blei | AAS/ICP | % des B | 54,1 | 26,7 |
| lösl. Antimon | AAS/ICP | % des B | 11,4 | 7,5 |
| lösl. Zinn | AAS/ICP | % des B | -94,6* | -107,6* |
| lösl. Tellur | AAS/ICP | % des B | 30,8 | n.ber. |
| lösl. Thallium | AAS/ICP | % des B | 79,0 | 46,2 |
| lösl. Vanadium | AAS/ICP | % des B | 17,6 | 11,6 |

| | | | | |
|---|---|---|---|---|
| OP Originalprobe B untersuchter Bestandteil n.ber. nicht berechenbar, Ergebnisse (teilweise) unter der Bestimmungsgrenze * Kontamination durch Auslaugprozedur | | | | |

Wie die Werte zeigen erlaubt das erfindungsgemäße Verfahren, die Konzentration von unerwünschten Bestandteilen von Bypassstäuben signifikant zu verringern, was somit zu einer verbesserten Qualität des Endprodukts führt. Ferner können im Gegensatz zu herkömmlichen Techniken, bei denen die abgetrennten Bestandteile verworfen werden, was aus Umweltgesichtspunkten inakzeptabel ist, die in der Klinker- und Zementherstellung unerwünschten Materialen zurück gewonnen werden und einer weiteren Verwertung zugeführt werden.

Weitere Ausführungsformen des erfindungsgemäßen Verfahrens können den folgenden Patentansprüchen entnommen werden

## Patentansprüche

1. Verfahren zum Behandeln von Bypassstäuben bzw. -gasen aus der Ziegel-, Zement- oder Klinkerherstellung, das das in-Kontakt-bringen des Bypassstaubs/gases mit einer wässrigen Phase umfasst, wobei anschließend feste bzw. unlösliche Bestandteile durch Filtrieren oder Zentrifugieren abgetrennt werden und die erhaltene wässrige Phase nach einem Schritt zur Abtrennung von unerwünschten Metallen (As, Be, Cd, Co, Cr, Cu, Hg, Mn, Ni, Pb, Sb, Sn, Te, Tl, V) verkocht wird, um die gelösten Bestandteile zurückzugewinnen.

2. Verfahren gemäß Anspruch 1, in dem das in-Kontakt-bringen mit der wässrigen Phase in einer Bypassleitung vorgenommen wird.

3. Verfahren gemäß einem der Ansprüche 1 oder 2, in dem vor dem in-Kontakt-bringen mit der wässrigen Phase eine Abtrennung der nicht-flüchtigen Bestandteile vorgenommen wird.

4. Verfahren gemäß Anspruch 1 oder 2, worin keine Abtrennung nicht-flüchtiger Bestandteile vor dem in-Kontakt-bringen mit der wässrigen Phase vorgenommen wird.

5. Verfahren gemäß einem der Ansprüche 1 - 4, worin das in-Kontakt-bringen mit der wässrigen Phase die Einleitung des Bypassgases/des Bypassstaubs in eine wässrige Phase umfasst.

6. Verfahren gemäß einem der Ansprüche 1 - 5, worin die festen Bestandteile einer weiteren Extraktion mit einer wässrigen Phase unterzogen werden.

7. Verfahren gemäß einem der Ansprüche 1 - 6, worin die festen bzw. ungelösten Bestandteile des Bypassstaubes/des Bypassgases nach dem in-Kontakt-bringen mit der wässrigen Phase in den Zement- oder Klinkerherstellungsprozess zurückgeführt werden.

8. Verfahren gemäß Anspruch 3, worin die vor dem in-Kontakt-bringen mit der wässrigen Phase abgetrennten Bestandteile in den Zementherstellungsprozess zurückgeführt werden.

9. Verfahren gemäß einem der Ansprüche 1 - 8, worin die wässrige Phase wenigstens eine Hilfssubstanz enthält, die aus anorganischen Substanzen (vorzugsweise Chloride, Nitrate, Sulfide und Sulfate der Alkali- und Erdalkalimetalle als auch Ammoniumpolysulfid)und organischen Substanzen (vorzugsweise Salze chelatierender Säuren, wie EDTA) ausgewählt ist.

10. Verfahren gemäß einem der Ansprüche 1 - 9, worin die zum in-Kontakt-bringen mit dem Bypassstaub/dem Bypassgas verwendete wässrige Phase kontinuierlich oder in Intervallen umgewälzt oder ersetzt wird und durch frisch zugeführte oder umgewälzte, aufbereitete wässrige Phase ersetzt wird.

11. Verfahren gemäß einem der Ansprüche 1 - 10, worin der Chloridgehalt der festen bzw. unlöslichen Bestandteile der nach dem in-Kontakt-bringen mit der wässrigen Phase erhaltenen Aufschlämmung nach deren Abtrennung weniger als 20%, bevorzugt weniger als 10%, weiterhin stärker bevorzug weniger als 5%, und am stärksten bevorzugt weniger als 2% des Chloridgehalts der zur Klinker-, Ziegel- oder Zementherstellung verwendeten Ausgangsstoffe beträgt.

12. Verfahren gemäß Anspruch 1, worin die Rückgewinnung der gelösten Bestandteile der wässrigen Phase eine fraktionierte Kristallisation umfasst.

13. Verfahren gemäß Anspruch 1, worin die Abtrennung unerwünschter Metalle vor einer Weiterbehandlung der nach der Abtrennung resultierenden wässrigen Phase zum Erhalt der gelösten Bestandteile durchgeführt wird.

14. Verfahren gemäß einem der Ansprüche 1 - 13, worin zur Weiterbehandlung der wässrigen Phase Wärmeenergie verwendet wird, die dem Bypassgas/dem Bypassstaub vor dem in-Kontakt-bringen mit der wässrigen Phase entzogen wird.

15. Produkt, erhalten aus der Rückgewinnung der in der nach dem in-Kontakt-bringen in der wässrigen Phase gelösten Bestandteile gemäß einem Verfahren eines der Ansprüche 1 - 14.

16. Produkt gemäß Anspruch 15, das im Wesentlichen (d.h. bevorzugt mehr als 80 Gew.-%, stärker bevorzugt mehr als 90% Gew.-%) aus Alkali- und Erdalkalimetallchloriden besteht.

17. Verwendung eines Produkts gemäß Anspruch 15 oder 16 als Streusalz, Leckstein, Rohstoff für Elektrolysen zur Chlor- und/oder Alkalihydroxidgewinnung, Flammschutz, Dustbinder, als Düngerkomponente oder zur Glas- bzw. Keramikherstellung.

## Claims

1. Method for treating by-pass dusts or by-pass gases from brick, cement or clinker production which comprises contacting the by-pass dust/gas with an aqueous phase, wherein subsequently solid or insoluble constituents are separated off by filtering or centrifuging and the aqueous phase obtained is concentrated after a step for separating off undesirable metals (As, Be, Cd, Co, Cr, Cu, Hg, Mn, Ni, Pb, Sb, Sn, Te, Tl, V) to recover the dissolved constituents.

2. Method according to claim 1, in which contacting with the aqueous phase is carried out in a by-pass pipe.

3. Method according to one of claims 1 or 2, in which before contacting with the aqueous phase, separating off of the non-volatile constituents is carried out.

4. Method according to claim 1 or 2, wherein separating off of non-volatile constituents is not carried out before contacting with the aqueous phase.

5. Method according to one of claims 1 - 4, wherein contacting with the aqueous phase comprises the introduction of the by-pass gas/of the by-pass dust into an aqueous phase.

6. Method according to one of claims 1 - 5, wherein the solid constituents are subjected to a further extraction using an aqueous phase.

7. Method according to one of claims 1 - 6, wherein the solid or undissolved constituents of the by-pass dust/of the by-pass gas are returned to the cement or clinker production process after contacting with the aqueous phase.

8. Method according to claim 3, wherein the constituents separated off before contacting with the aqueous phase are returned to the cement production process.

9. Method according to one of claims 1 - 8, wherein the aqueous phase contains at least one auxiliary substance which is selected from inorganic substances (preferably chlorides, nitrates, sulphides and sulphates of the alkali metals and the alkaline earth metals and ammonium polysulphide) and organic substances (preferably salts of chelating acids, such as EDTA).

10. Method according to one of claims 1 - 9, wherein the aqueous phase used for contacting with the by-pass dust/the by-pass gas is circulated or replaced continuously or at intervals and is replaced by freshly supplied or circulated, processed aqueous phase.

11. Method according to one of claims 1 - 10, wherein the chloride content of the solid or insoluble constituents of the slurry obtained after contacting with the aqueous phase, after separation thereof, is less than 20%, preferably less than 10%, furthermore more preferably less than 5%, and most preferably less than 2% of the chloride content of the starting materials used for clinker, brick or cement production.

12. Method according to claim 1, wherein the recovery of the dissolved constituents of the aqueous phase comprises fractionated crystallisation.

13. Method according to claim 1, wherein separating off of undesirable metals before further treatment of the aqueous phase resulting after separating off, is carried out to obtain the dissolved constituents.

14. Method according to one of claims 1 - 13, wherein for further treatment of the aqueous phase, heat energy is used which is removed from the by-pass gas/the by-pass dust before contacting with the aqueous phase.

15. Product obtained from the recovery of the constituents dissolved in the aqueous phase after contacting according to a method of one of claims 1 - 14.

16. Product according to claim 15, which consists essentially (that is, preferably more than 80 wt.%, more preferably more than 90% wt.%) of alkali metal chlorides and alkaline earth metal chlorides.

17. Use of a product according to claim 15 or 16 as thawing salt, licking stone, raw material for electrolyses for chlorine and/or alkali metal hydroxide recovery, flameproofing, dust binders, as a fertiliser component or for glass or ceramic production.

## Revendications

1. Procédé pour traiter des poussières de dérivation ou des gaz de dérivation provenant de la fabrication de briques, de ciment ou de clinker, qui comprend la mise en contact de la poussière de dérivation/du gaz de dérivation avec une phase aqueuse, des composants solides ou insolubles étant par la suite séparés par filtration ou par centrifugation et la phase aqueuse obtenue après une étape de séparation de métaux non souhaités (As, Be, Cd, Co, Cr, Cu, Hg, Mn, Ni, Pb, Sb, Sn, Te, Tl, V) étant évaporée en bouillant, pour récupérer les composants dissous.

2. Procédé selon la revendication 1, dans lequel la mise en contact avec la phase aqueuse est effectuée dans un conduit de dérivation.

3. Procédé selon l'une quelconque des revendications 1 ou 2, dans lequel avant la mise en contact avec la phase aqueuse, une séparation des composants non volatils est effectuée.

4. Procédé selon la revendication 1 ou 2, dans lequel aucune séparation de composants non volatils n'est effectuée avant la mise en contact avec la phase aqueuse.

5. Procédé selon l'une quelconque des revendications 1 - 4, dans lequel la mise en contact avec la phase aqueuse comprend l'introduction du gaz de dérivation / de la poussière de dérivation dans une phase aqueuse.

6. Procédé selon l'une quelconque des revendications 1 - 5, dans lequel les composants solides sont soumis à une extraction supplémentaire avec une phase aqueuse.

7. Procédé selon l'une quelconque des revendications 1 - 6, dans lequel après la mise en contact avec la phase aqueuse, les composants solides ou non dissous de la poussière de dérivation / du gaz de dérivation sont reconduits dans la fabrication de ciment ou de clinker.

8. Procédé selon la revendication 3, dans lequel les composants séparés sont reconduits dans le processus de fabrication de ciment avant la mise en contact avec la phase aqueuse.

9. Procédé selon l'une quelconque des revendications 1 - 8, dans lequel la phase aqueuse contient au moins une substance auxiliaire, qui est sélectionnée parmi des substances anorganiques (de préférence des chlorures, des nitrates, des sulfures et des sulfates des métaux alcalins et alcalinoterreux tout comme du polysulfure d'ammonium) et des substances organiques (de préférences des sels d'acides chélatants, comme l'EDTA).

10. Procédé selon l'une quelconque des revendications 1 - 9, dans lequel la phase aqueuse utilisée pour la mise en contact avec la poussière de dérivation / le gaz de dérivation est brassée ou remplacée en continu ou par intervalles et est remplacée par une phase aqueuse traitée, fraîchement alimentée ou brassée.

11. Procédé selon l'une quelconque des revendications 1 - 10, dans lequel la teneur en chlorure des composants solides ou insolubles de la décantation obtenue après la mise en contact avec la phase aqueuse s'élève, après leur séparation à moins de 20 %, de préférence à moins de 10 %, de manière plus préférée à moins de 5 % et de la manière la plus préférée à moins de 2 % de la teneur en chlorure de la matière initiale utilisée pour la fabrication de clinker, de briques ou de ciment.

12. Procédé selon la revendication 1, dans lequel la récupération des composants dissous de la phase aqueuse comprend une cristallisation fractionnée.

13. Procédé selon la revendication 1, dans lequel la séparation de métaux non souhaités est effectuée avant un traitement ultérieur de la phase aqueuse résultant après la séparation, pour l'obtention des composants dissous.

14. Procédé selon l'une quelconque des revendications 1 - 13, dans lequel pour le traitement ultérieur de la phase aqueuse de l'énergie thermique est utilisée, qui est prélevée dans le gaz de dérivation / dans la poussière de dérivation avant la mise en contact avec la phase aqueuse.

15. Produit obtenu de la récupération des composants dissous dans la phase aqueuse après la mise en contact selon un procédé d'une des revendications 1 - 14.

16. Produit selon la revendication 15, qui consiste essentiellement (c'est à dire de préférence à raison de plus de 80 % en poids, de manière plus préférée à plus de 90 % en poids) en du chlorure de métaux alcalins et alcalinoterreux.

17. Utilisation d'un produit selon la revendication 15 ou 16 en tant que sel d'épandage, pierre à lécher, matière première pour des électrolyses pour l'obtention de chlore et/ou d'hydroxyde alcalin, pare-flamme, liant de poussières, en tant que composant d'engrais ou pour la fabrication de verre ou de céramique.
